# EUROPÄISCHE PATENTSCHRIFT

(11) **EP 3 228 493 B1**
(45) Veröffentlichungstag und Bekanntmachung des Hinweises auf die Patenterteilung: **15.09.2021**
(21) Anmeldenummer: 17000469.1
(22) Anmeldetag: 22.03.2017
(51) Int. Cl.: B60N 2/75

(54) **ARMLEHNE**
ARMREST
ACCOUDOIR

(30) Priorität: 07.04.2016 DE 102016003992
(43) Veröffentlichungstag der Anmeldung: 11.10.2017
(73) Patentinhaber: GRAMMER AG, 92289 Ursensollen (DE)
(72) Erfinder: Nuss, Ralph, 92284 Poppenricht (DE); Delling, Gerhard, 92546 Schmidgaden (DE)
(74) Vertreter: Roche, von Westernhagen & Ehresmann

(56) Entgegenhaltungen:
- EP-A1- 1 164 051
- JP-A- 2007 283 908
- US-A1- 2012 133 189

## Beschreibung

Die Erfindung betrifft eine Armlehne.

Die EP 1 530 523 A1 beschreibt eine Armlehne mit einer Armauflage, die auf einer Achse drehbar gelagert ist. Mittels einer zwischen einer Riegelposition und einer Löseposition bewegbaren Verriegelungsvorrichtung kann die relativ zu der Achse schwenkbare Armauflage in unterschiedlichen Positionen verriegelt werden. Dafür ist ein Form-Richt-Gesperre vorgesehen, mittels welchem die Armauflage in der Riegelposition nach oben bewegbar ist, wobei eine Bewegung nach unten jedoch verriegelt ist. Erst wenn die Armauflage über eine bestimmte obere Position hinaus nach oben geschwenkt wurde, bewegt sich die Verriegelungsvorrichtung aus einer Riegelposition in eine Löseposition, so dass die Armauflage abwärts schwenkbar ist. Sobald die Armauflage über eine bestimmte untere Position hinaus geschwenkt wird, bewegt sich die Verriegelungsvorrichtung in die Riegelposition.

Die Verriegelungsvorrichtung umfasst zwei ringförmige Stirnverzahnungen, die einem mit der Armlehne bewegungsverbundenen Primärteil und einem drehfest auf der Achse gehaltenen Sekundärteil zugeordnet sind. Das Sekundärteil ist in axialer Richtung verschiebbar auf der Achse gelagert und ist in der Riegelposition in Eingriff mit der Verzahnung des Primärteils und in der Löseposition außer Eingriff mit der Verzahnung des Primärteils. Eine Federkraft belastet das Sekundärteil in Eingriff mit dem Primärteil.

Die Schwenkachse sowie das Primärteil und das Sekundärteil sind von Metallteilen gebildet, die trotz geringen Platzbedarfs hohe Haltekräfte aufnehmen können, so dass die Verriegelungsvorrichtung die Konstruktion der Armlehne nicht wesentlich beeinträchtigt.

Aus US 2012/0133189 A1 ist eine Armlehnenvorrichtung bekannt, welche eine um eine Schwenkachse schwenkbare Armauflage umfasst, die mit einer Verriegelungsvorrichtung in unterschiedlichen Schwenkpositionen verriegelbar ist. Die Verriegelungsvorrichtung weist eine an der Armauflage befestigte ringförmige erste Stirn-Verzahnung auf, die mit der Armauflage bewegungsverbunden ist. Eine mit dieser Verzahnung zusammenwirkende zweite Stirn-Verzahnung ist einem Ringelement zugeordnet, welches axial bewegbar auf einem Tragelement geführt ist, welches an einem Sitz drehfest schraubbefestigt ist und von Federn gegen die erste Verzahnung belastet ist. Die Armauflage ist mit einer Struktur versehen, die mit einer Gegenstruktur des Ringelements zusammenwirkt, um in einem oberen Schwenkbereich der Armauflage das Ringelement auszurücken und damit die Bewegung der Armauflage in Schwenkrichtung nach unten zu ermöglichen. Ein mit der Armauflage bewegungsverbundener Deckel ist mit zwei hakenförmigen, elastisch radial ausfederbaren Armen versehen, die das Ringelement über einen bestimmten Schwenkwinkel hinweg in der ausgerückten Stellung halten.

Die EP 1 164 051 A1 offenbart eine Vorrichtung mit zwei zusammenwirkenden Bauteilen, die mit Stirnverzahnungen versehen sind und z.B. als Verriegelung einer Armauflage in unterschiedlichen Schwenkpositionen dienen können. In der Druckschrift sind verschiedene Möglichkeiten der Separation der zusammenwirkenden Bauteile aufgezeigt.

In JP 2007-283908 A ist eine schwenkbare Armlehne mit Verriegelungsvorrichtung für einen Sitz offenbart.

Es war Aufgabe der Erfindung eine Armlehne zu schaffen, die trotz hoher Haltekräfte eine leichtere Bauweise und eine flexible Gestaltung ermöglicht. Darüber hinaus war es Aufgabe der Erfindung eine Armlehne zu schaffen, die in Richtung der Schwenkachse, d.h. in eine Richtung parallel zu der Schwenkachse, schmal ausgebildet ist.

Die Aufgabe wurde gelöst durch eine Armlehne mit den Merkmalen des Anspruchs 1.

Die Armlehne ist z.B. einem Sitz, insbesondere einem Fahrzeugsitz zugeordnet. Die Armlehne umfasst ein Basisteil, an welchem eine Armauflage zwischen einer ersten Position und einer zweiten Position um eine Schwenkachse in entgegengesetzte Schwenkrichtungen schwenkbar gelagert ist. Die Armauflage ist mit einer Verriegelungsvorrichtung in wenigstens einer Schwenkposition verriegelbar, wobei die Verriegelungsvorrichtung eine bewegbare erste Struktur und eine unbewegbare zweite Struktur umfasst, die mit der ersten Struktur lösbar in Eingriff bringbar ist. Die erste Struktur ist zwischen einer Riegelposition und einer Löseposition bewegbar und z.B. von einer Rückstellkraft in die Riegelposition belastet. Die Rückstellkraft wird z.B. von wenigstens einer Feder bereitgestellt.

Die erste Struktur ist z.B. mit einer Führung versehen, mittels welcher die erste Struktur zwischen der Riegelposition und der Löseposition bewegbar geführt ist. Die erste Struktur ist z.B. mittels einer Axialführung, d.h. parallel zu der Schwenkachse der Armauflage, geführt.

Z.B. ist die erste Struktur der Armauflage zugeordnet. In diesem Fall ist die erste Struktur z.B. einem gesonderten Teil zugeordnet, welches drehfest mit der Armlehne verbunden ist. Das Teil ist z.B. in einer Richtung parallel zu der Drehachse bewegbar gelagert. Die zweite Struktur ist dann dem Basisteil zugeordnet.

Gemäß einer alternativen Ausführung ist die erste Struktur dem Basisteil zugeordnet und z.B. drehfest an dem Basisteil gelagert. Z.B. ist die erste Struktur parallel zur Schwenkachse verlagerbar. Auch in diesem Fall ist die erste Struktur z.B. einem gesonderten Teil zugeordnet, welches relativ zu dem Basisteil bewegbar ist.

Die zweite Struktur ist z.B. unbewegbar an dem Basisteil oder an der Armauflage angeformt. Bei dieser Ausführungsform ist die zweite Struktur z.B. einteilig mit dem Basisteil oder der Armauflage als Formteil ausgebildet. Alternativ kann die zweite Struktur einem gesonderten Teil zugeordnet sein, welches unbewegbar fest an dem Basisteil oder der Armauflage befestigt ist.

Mit anderen Worten ist die erste Struktur z.B. bewegbar der Armauflage zugeordnet und die zweite Struktur ist fest an dem Basisteil angeordnet. Alternativ ist z.B. die erste Struktur bewegbar dem Basisteil zugeordnet und die zweite Struktur fest der Armauflage zugeordnet.

Einer Ausführungsform gemäß sind die erste Struktur und die zweite Struktur koaxial zur Schwenkachse der Armlehne ausgebildet. Die erste Struktur und die zweite Struktur sind z.B. auf einer Kreisfläche oder Kreisringfläche ausgebildet, die koaxial zu der Schwenkachse ausgebildet ist.

Z.B. bilden die erste Struktur und die zweite Struktur zueinander weisende Stirnverzahnungen. Die Stirnverzahnungen sind z.B. ringförmig ausgebildet.

Die erste Struktur ist z.B. einem ringförmigen Riegel zugeordnet, der in axialer Richtung bewegbar ist, aber drehfest mit der Armauflage oder mit dem Basisteil verbunden ist.

Gemäß der Erfindung umfasst das Basisteil zwei Lagerflächen, auf welchen sich Lagerflächen der Armauflage unmittelbar oder mittelbar abstützen, wobei die Lagerflächen des Basisteils und / oder der Armauflage z.B. axial voneinander beabstandet sind. Axial beabstandet bedeutet, dass die Flächen in einer Richtung, die parallel zu der Schwenkachse ist, voneinander beabstandet sind.

Der Erfindung gemäß ist eine erste Lagerfläche an einem ersten Zapfen und eine zweite Lagerfläche an einem koaxial zu dem ersten Zapfen angeordneten zweiten Zapfen ausgebildet. Die erste Lagerfläche ist z.B. von einer zylindrischen Fläche gebildet, die koaxial zu der Schwenkachse ist. Die erste Lagerfläche ist z.B. an einem zylindrischen Vorsprung ausgebildet. Der zweite Zapfen kann z.B. ein Hohlzylinder sein, an dem die zweite Lagerfläche ausgebildet ist. Der erste Zapfen kann z.B. innerhalb des hohlzylindrisch ausgebildeten zweiten Zapfens angeordnet sein.

Gemäß der Erfindung ist eine Lagerfläche bezüglich der Schwenkachse radial innerhalb und eine Lagerfläche radial außerhalb der ersten Struktur und der zweiten Struktur angeordnet. Diese Ausführungsform setzt voraus, dass die erste Struktur und die zweite Struktur auf einer Kreisbahn bzw. Teilkreisbahn um die Schwenkachse ausgebildet sind. Mit dieser Ausführungsform ist eine flachbauende Konstruktion der Armlehne in axialer Richtung möglich.

Z.B. bildet die Armauflage an einem Endbereich eine Aussparung, die von dem ersten Zapfen durchgriffen ist. Die Aussparung ist z.B. koaxial zu der Schwenkachse ausgebildet.

Gemäß einer Ausführungsform ist die erste Struktur durch manuelle Betätigung und / oder in Abhängigkeit der Position der Armauflage zwischen der Riegelposition und der Löseposition verstellbar. Z.B. ist eine Betätigungsvorrichtung vorgesehen, mittels welcher die Verriegelungsvorrichtung manuell von dem Benutzer in die Löseposition verstellt werden kann. Gemäß einer alternativen Ausführung oder zusätzlich wird die Armlehne in Abhängigkeit von der Armlehnenposition in die Löseposition verstellt, wie aus dem Stand der Technik bekannt. Es wird auf die EP 1 530 523 A1 verwiesen.

Z.B. bildet die Verriegelungsvorrichtung ein Form-Richt-Gesperre, wobei die Armauflage in der Riegelposition der Verriegelungsvorrichtung aufwärts schwenkbar ist, während ein Abwärtsschwenk aber verhindert wird. Dabei hat die Armlehne z.B. folgende Funktion: Wird die Armauflage in eine bestimmte obere Schwenkposition bewegt, verstellt die Verriegelungsvorrichtung automatisch von der Riegelposition in die Löseposition, in welcher die erste Struktur und die zweite Struktur außer Eingriff stehen. In der Löseposition kann die Armauflage abwärts geschwenkt werden. In einer unteren Schwenkposition verstellt die Verriegelungsvorrichtung in die Riegelposition wodurch das Form-Richt-Gesperre wieder aktiviert ist und nur noch eine Aufwärtsbewegung der Armlehne möglich ist.

Das Basisteil und die Armauflage sind insbesondere als Kunststoffformteile ausgebildet. Auch die erste und / oder die zweite Struktur sind z.B. als Kunststoffformteile ausgebildet. Die erste Struktur bildet z.B. ein separates Kunststoffteil, während die zweite Struktur an das Basisteil oder an die Armauflage angeformt ist.

Weitere Merkmale und Vorteile der Erfindung ergeben sich anhand der nachfolgenden schematischen Figuren, die ein Ausführungsbeispiel zeigen. Es zeigen:
Fig. 1 eine Explosionsdarstellung der erfindungsgemäßen Armlehne,
Fig. 2 eine perspektivische Ansicht der Armlehne, wobei sich eine Armauflage in einer ersten Gebrauchsposition befindet,
Fig. 3 eine Schnittdarstellung der Armlehne, wobei sich die Armauflage in der ersten Gebrauchsposition (unterste Position) befindet,
Fig. 4 in Anlehnung an Fig. 3 die Armlehne, wobei sich die Armauflage in einer Nichtgebrauchsposition (oberste Position) befindet,
Fig. 5 eine Schnittansicht der Armlehne in der Riegelposition,
Fig. 6 in Anlehnung an Fig. 5 eine Schnittansicht in der Löseposition, wobei die Verriegelungsvorrichtung mit einem Steuerring verstellt wurde,

Eine Armlehne insgesamt ist in den Fig. mit dem Bezugszeichen 10 bezeichnet. Gleiche Bezugszeichen in den unterschiedlichen Fig. bezeichnen entsprechende Teile, auch wenn kleine Buchstaben hinzugefügt oder weggelassen sind.

Die Armlehne 10 umfasst ein Basisteil 11 und eine Armauflage 12. Das Basisteil 11 umfasst im vorliegenden Ausführungsbeispiel Teile 11a und 11b die aneinander befestigt sind und so das Basisteil 11 ausbilden. Jedes der Teile 11a und 11b ist ein Kunststoffformteil, welches im Kunststoffspritzgießverfahren hergestellt wurde. Gemäß einer alternativen Ausführung könnte das Basisteil auch einteilig als Kunststoffteil ausgebildet sein. Das Teil 11b des Basisteils 11 ist als Fuß ausgebildet und umfasst Öffnungen 16, mit denen das Basisteil 11 an der Fahrzeugstruktur befestigt, z.B. verschraubt werden kann.

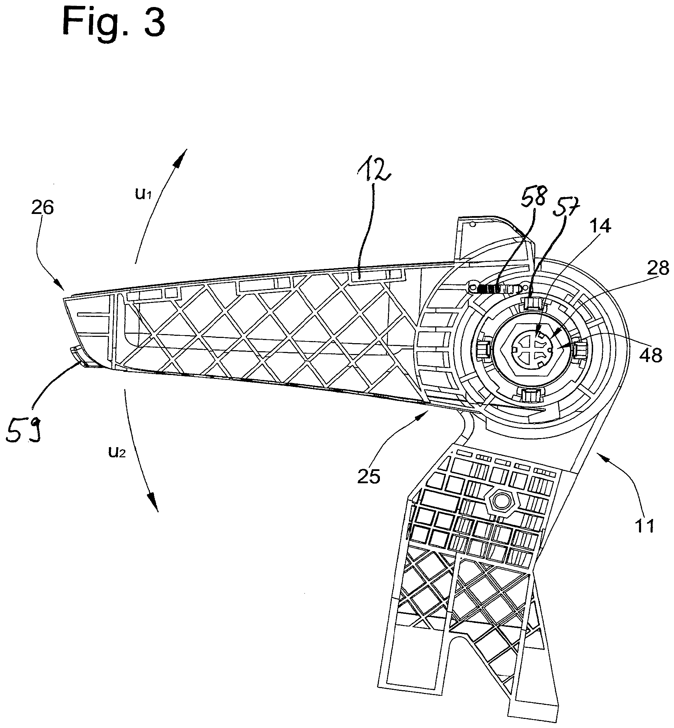

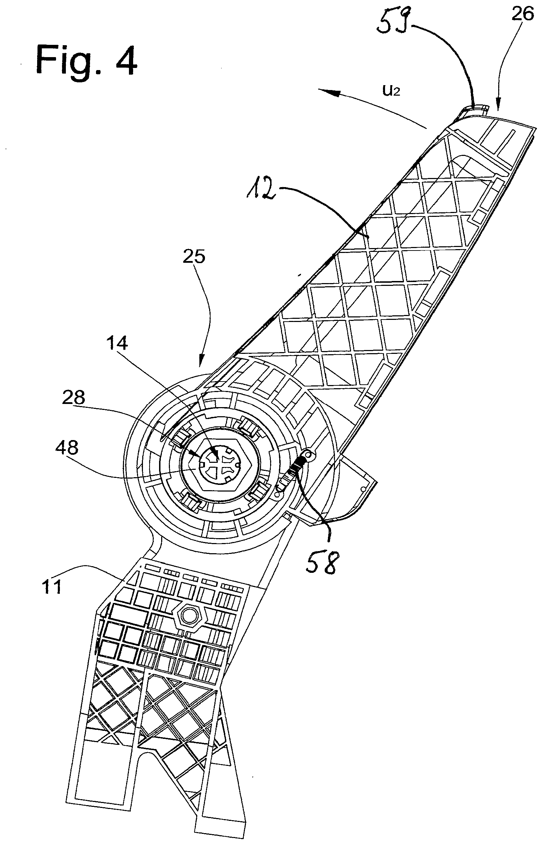

Die Armauflage 12 ist um eine Schwenkachse a schwenkbar an dem Basisteil 11 gehalten. Die Armauflage 12 ist zwischen einer unteren ersten Position (siehe Fig. 3) und einer oberen zweiten Position (siehe Fig. 4) schwenkbar. Die erste Position ist eine Gebrauchsposition, in welcher der Benutzer sich auf der Armauflage abstützen kann, und die zweite Position ist eine Nichtgebrauchsposition.

Die Armlehne 10 umfasst eine Verriegelungsvorrichtung 13, die zwischen einer Riegelposition und einer Löseposition verstellbar ist. In der Riegelposition kann die Armauflage 12 aufwärts um die Schwenkachse a in Richtung u1 geschwenkt werden, ein Abwärtsschwenk in Richtung u2 ist jedoch nicht möglich. In der Löseposition kann die Armauflage 12 frei in beide Richtungen u1 und u2 geschwenkt werden.

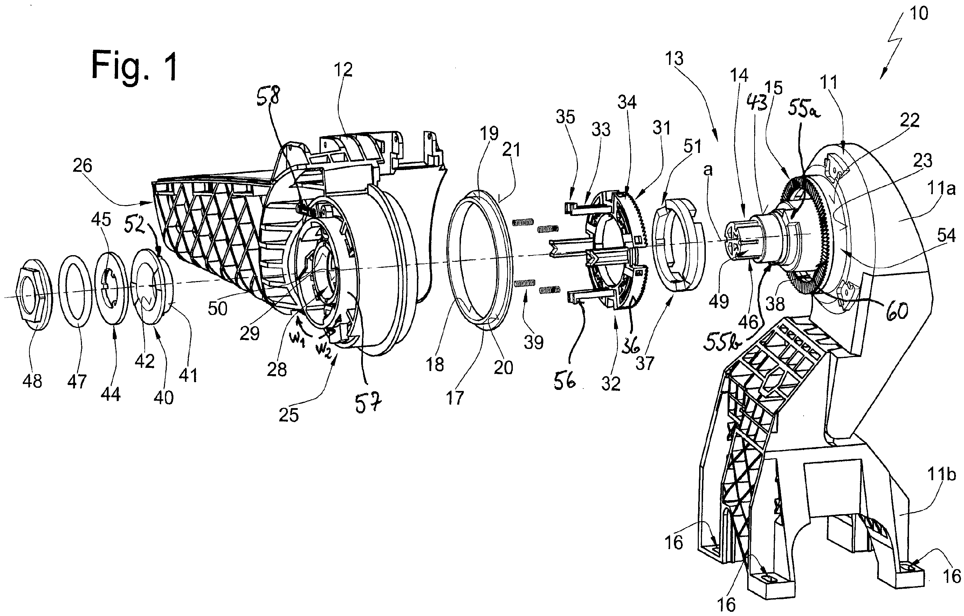

Gemäß Fig. 1 umfasst das Basisteil 11 einen ersten Zapfen 14 mit mehreren kreiszylindrischen, zu der Schwenkachse a koaxialen Flächen. In dem vorliegenden Ausführungsbeispiel weist der Zapfen 14 eine erste Lagerfläche 43 sowie einen Gewindebereich 49 auf. Die Lagerfläche 43, und der Gewindebereich 49 sind auf Abschnitten unterschiedlichen Durchmessers des Zapfens 14 angeordnet. Die unterste End-Position und die oberste End-Position der Armauflage 12 sind durch am Zapfen 14 ausgebildete Anschläge 55a und 55b definiert, die mit nicht dargestellten Gegenanschlägen der Armauflage 12 zusammenwirken.

Das Basisteil 11 umfasst ferner eine Struktur 15. Die Struktur 15 ist Teil der Verriegelungsvorrichtung 13 und ist im vorliegenden Ausführungsbeispiel als Stirnverzahnung ausgebildet, die unbeweglich fest an dem Basisteil 11 gehalten ist. Die Zähne der Stirnverzahnung verlaufen radial zu der Schwenkachse a. Die Stirnverzahnung ist im vorliegenden Ausführungsbeispiel einstückig an das Teil 11a des Basisteils 11 angeformt.

Die Struktur 15 ist koaxial zu der Schwenkachse a ausgebildet und einem kreiszylindrischen zweiten Zapfen 54 zugeordnet, welcher als Hohlzylinder ausgebildet und zu der Schwenkachse a koaxial ist. Der Zapfen 14 ist bezüglich der Schwenkachse a radial innerhalb des hohlzylindrischen Zapfens 54 angeordnet. Die Struktur 15 ist auf einer Stirnseite 60 des Zapfens 54 angeordnet. Eine Mantelfläche des Zapfens 54 bildet die Lagerfläche 22. Die Lagerfläche 22 ist in Bezug auf die Schwenkachse a radial auswärts der Lagerfläche 43 angeordnet. Die erste Struktur 31 und die zweite Struktur 15 sind in einem sich radial erstreckenden Bereich ausgebildet, der zwischen dem Durchmesser der Lagerfläche 43 und dem Durchmesser der Lagerfläche 22 liegt.

Zwischen dem Zapfen 54 und dem Zapfen 14 ist eine ringförmige Aussparung 38 gebildet, die der Aufnahme eines Steuerrings 37 dient.

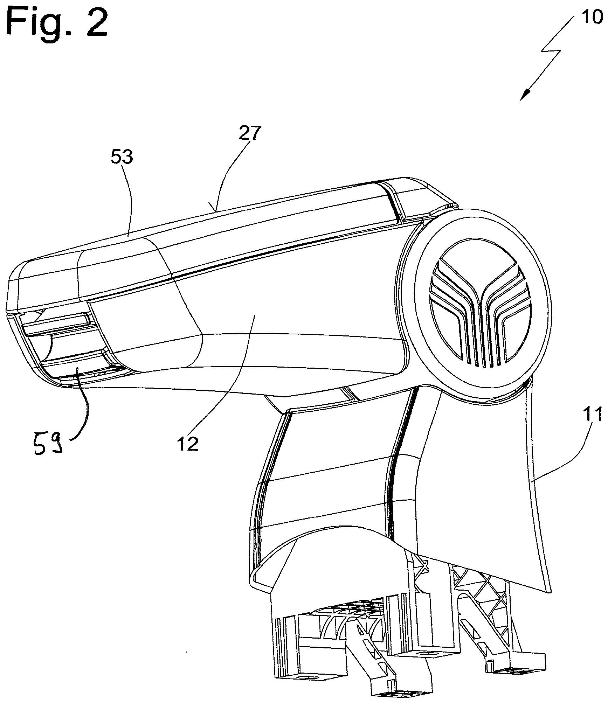

Die Armauflage 12 umfasst einen langgestreckten Körper mit einem ersten Endbereich 25 und einem zweiten Endbereich 26. Der Körper ist als Kunststoffformteil ausgebildet. Der zweite Endbereich 26 ist ein zum Abstützen des Arms ausgebildeter frei von der Schwenkachse wegragender Bereich. Gemäß Fig. 2 ist an der Armauflage 12 eine Verkleidung sowie ein Deckel 53 befestigt. Der Deckel 53 stellt eine Auflagefläche 27 zum Abstützen des Benutzers bereit. In den anderen Figuren sind die Verkleidung und der Deckel 53 nicht dargestellt.

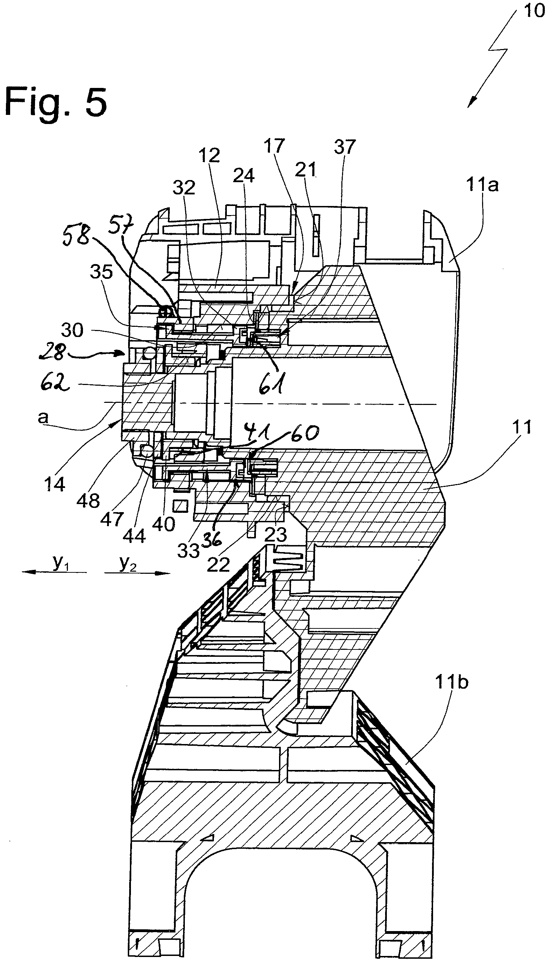

Der Endbereich 25 der Armauflage 12 ist ein Lagerbereich, mit welchem die Armauflage 12 an dem Basisteil 11 gelagert ist (siehe die Fig. 1 und 5). Der Endbereich 25 umfasst eine Öffnung 28, die mit einer Innenfläche 24 sowie mit einer Innenfläche 29 zur Lagerung der Armauflage 12 an dem Zapfen 14 versehen ist. Innerhalb der Öffnung 28 sind darüber hinaus eine Innenfläche 30 sowie eine Fläche 50 ausgebildet.

Für die Verbesserung der Gleiteigenschaften ist ein erster Gleitring 17 vorgesehen, welcher eine Innenfläche 18, eine Außenfläche 19 sowie eine Anlagefläche 20 und eine der Anlagefläche 20 gegenüber liegende Anlagefläche 21 aufweist. Die Innenfläche 18 liegt an einer kreiszylindrischen zu der Schwenkachse a koaxialen Außenfläche 22 des Zapfens 54 an. Die Außenfläche 22 bildet eine Mantelfläche des hohlzylindrischen Zapfens 54. Die Anlagefläche 21 steht mit einer an die Außenfläche 22 angrenzenden Anschlagfläche 23 des Basisteils 11 in Kontakt. Eine koaxial zu der Schwenkachse a ausgebildete, kreiszylindrisch geformte Innenfläche 24 der Armauflage 12 steht mit der Außenfläche 19 in Kontakt.

In Fig. 1 ist ferner eine Gleitbuchse 40 erkennbar, die mit einer Außenfläche 41 versehen ist, welche mit der Innenfläche 29 der Öffnung 28 in Kontakt steht. Die Außenfläche 41 hat mehrere sich in axialer Richtung der Schwenkachse a erstreckende, radial nach außen vorstehende Vorsprünge 52, die in komplementäre Nuten 62 der Innenfläche 29 eingreifen und auf diese Weise eine Drehsicherung bilden. Die Gleitbuchse 40 ist daher mit der Armauflage 12 drehverbunden. Eine Innenfläche 42 der Gleitbuchse 40 ist auf einer kreiszylindrischen Lagerfläche 43 des Zapfens 14 gelagert.

Ein Sicherungsring 44 umfasst mehrere radial nach innen vorragende Vorsprünge 45 die in korrespondierende Nuten 46 des Zapfens 14 eingreifen und ein Drehen des Sicherungsrings 44 verhindern. Zwischen dem Sicherungsring 44 und der Buchse 40 findet daher eine Relativbewegung statt, wenn die Armauflage 12 geschwenkt wird.

Eine Kontermutter 48 ist auf einem Gewinde 49 des Zapfens 14 aufgeschraubt. Zwischen der Kontermutter 48 und dem Sicherungsring 44 ist das Andruckelement 47 angeordnet, welches im vorliegenden Ausführungsbeispiel von einem elastisch verformbaren Ring aus Kunststoff oder Naturstoff gebildet ist. Alternativ kann als Andruckelement 47 aber z.B. auch eine Tellerfeder oder eine andere Feder verwendet werden. Das Andruckelement 47 übt flexibel eine Normalkraft in Richtung y2 auf den Sicherungsring 44 aus, wodurch zwischen dem Sicherungsring 44 und der Gleitbuchse 40 eine Reibkraft erzeugt wird. Die Reibkraft bewirkt, dass die Armauflage 12 in der Schwenkbewegung gedämpft wird.

Eine Struktur 31 ist an einem zwischen der Riegelposition und der Löseposition verlagerbaren, aus Kunststoff geformten, ringförmigen Riegel 32 angeformt. Die Struktur 31 bildet eine Stirnverzahnung, die mit der Struktur 15 zusammenwirkt und auf einer Stirnseite 61 des Riegels 32 angeordnet ist. Die Struktur 31 ist eine erste Struktur und die Struktur 15 ist eine zweite Struktur im Sinne der Erfindung. Die erste Struktur 31 ist, wie die zweite Struktur 15, kreisringförmig ausgebildet und umfasst mehrere, sich radial zur Schwenkachse a erstreckende Zähne.

Der Riegel 32 umfasst Führungsarme 33, die an einen mit der Struktur 31 versehenen hohlzylindrischen Ringbereich 34 angeformt sind. Die Führungsarme 33 ragen parallel zu der Schwenkachse a bezüglich des Ringbereichs 34 in Richtung y1 vor. Jeder Führungsarm 33 bildet endseitig einen hakenförmigen Endbereich 35, der mit Schrägflächen 56 versehen ist. Die Schrägflächen 56 wirken mit nicht dargestellten Gegenflächen eines Ausrückringes 57 derart zusammen, dass bei einer Drehung des Ausrückringes 57 in Richtung w1 entgegen der Rückstellkraft einer Feder 58 in eine betätigte Position, der Riegel 32 mit der Struktur 31 in Richtung y1 außer Eingriff mit der Struktur 15 bewegt wird.

Jeder Führungsarm 33 ist in einer Führungsaussparung der Armauflage 12 aufgenommen und dort in die Richtungen y1 und y2 bewegbar geführt. Die Innenfläche 30 dient als Führungsfläche für eine Außenfläche 36 des Riegels 32. Federn 39 belasten den Riegel 32 in Richtung y2, wobei die Struktur 31 in Eingriff mit der Struktur 15 belastet wird. Wenn also der Ausrückring 57 von der Feder 58 in Richtung w2 in eine unbetätigte Position bewegt wird, verlagern die Federn 39 den Riegel 32 in Richtung y2 in die Riegelposition.

Die Struktur 15 und die Struktur 31 bilden ein Form-Richt-Gesperre. Wenn sich die Verriegelungsvorrichtung 13 in der Riegelposition befindet, d.h., wenn die Struktur 15 und die Struktur 31 in Eingriff stehen, ist ein Aufwärtsschwenk der Armauflage 12 in Richtung u1 möglich, während ein Abwärtsschwenk der Armauflage 12 verhindert wird.

Der Steuerring 37 ist in der ringförmigen Aussparung 38 des Basisteils 11 angeordnet. Der Steuerring 37 steht mit dem Riegel 32 in Kontakt und bewegt diesen in bekannter Weise in Abhängigkeit der Position der Armlehne zwischen der Riegelposition und der Löseposition. Zur Funktion des Steuerrings 37 wird auf die EP 1 530 523 A1 verwiesen.

Bei dem vorliegenden Ausführungsbeispiel kann der Riegel 32 zusätzlich manuell mittels einer Betätigungsvorrichtung zwischen der Riegelposition und der Löseposition verstellt werden. Die Betätigungsvorrichtung umfasst eine Handhabe 59 (siehe Fig. 2), die mit einer nicht dargestellten Übertragungsvorrichtung - z.B. in Gestalt eines Gestänges - mit dem Ausrückring 57 verbunden ist. Bei einer Betätigung der Handhabe 59 wird der Ausrückring in Richtung w1 gedreht. Wird die Handhabe 59 nicht mehr betätigt, verlagert die Feder 58 die gesamte Betätigungsvorrichtung, d.h. die Handhabe 59, die Übertragungsvorrichtung und den Ausrückring 57 in die unbetätigte Position.

Die Montage der Armauflage 12 an dem Basisteil 11 wird wie folgt vorgenommen. Der Steuerring 37 wird derart in der Aussparung 38 des Basisteils 11 angeordnet, dass Steueraussparungen 51 zu einer nicht dargestellten Steuerstruktur des Riegels 32 weisen. Der Riegel 32 sowie die Gleitbuchsen 17 und 40 werden in den dafür vorgesehenen Sitzen der Armauflage 12 montiert. Anschließend wird die Armauflage 12 so auf dem Zapfen 14 montiert, dass der Zapfen 14 die Öffnung 28 durchgreift. Die Innenfläche 18 der Gleitbuchse 17 liegt dann an der Außenfläche 22 des Basisteils 11 an. Die Innenfläche 42 der Gleitbuchse 40 steht mit der Lagerfläche 43 des Zapfens 14 in Kontakt. Anschließend können der Sicherungsring 44 und der Andruckring 47 mit der Kontermutter 48 montiert werden.

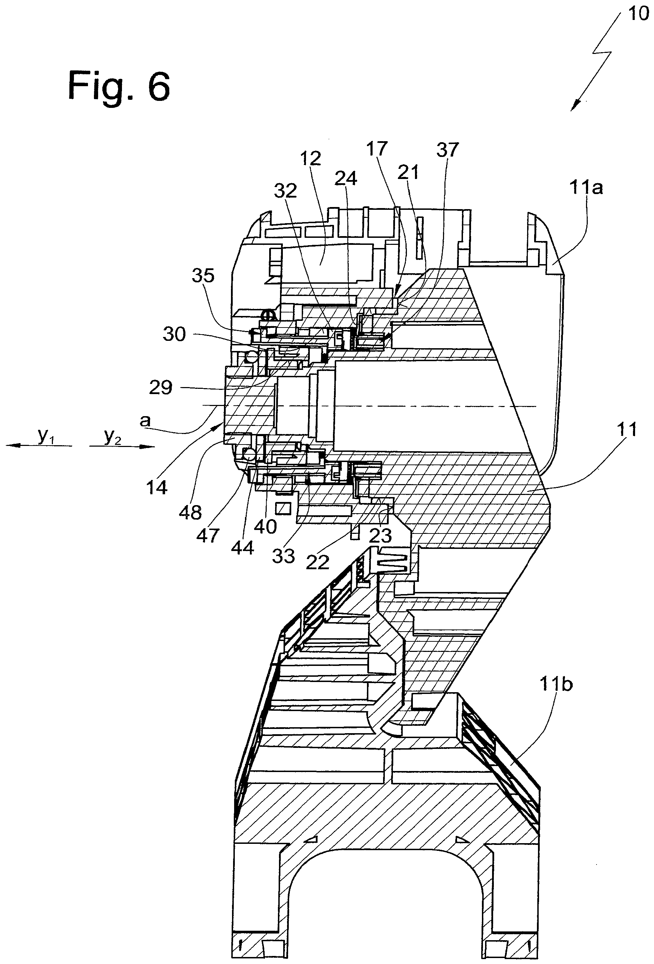

Die Funktion der Armlehne 10 wird nachfolgend erläutert. Aus der Endposition gemäß Fig. 3 (Gebrauchsposition) kann die Armauflage 12 in der Riegelposition in Richtung u1 in weitere Gebrauchspositionen verstellt werden. Eine Bewegung in Richtung u2 ist nicht möglich, weil die richtungsabhängige Verriegelung dies nicht ermöglicht. Wird die Armauflage 12 über einen bestimmten oberen Schaltpunkt hinaus, z.B. in die obere Endposition gemäß Fig. 4 bewegt, verlagert der Steuerring 37 den Riegel 32 mit der ersten Struktur 31 außer Eingriff mit der zweiten Struktur 15. Die Verriegelungsvorrichtung befindet sich dann in der Löseposition und die Armauflage 12 kann frei in die Richtungen u1 und u2 bewegt werden (siehe Fig. 6).

Gemäß Fig. 4 die obere Endposition erreicht, so dass die Armauflage 12 lediglich in Richtung u2 bewegt werden kann. Sobald die untere Endposition erreicht ist, schaltet der Steuerring 37 die Verriegelungsvorrichtung 13 in die Riegelposition, so dass der Riegel 32 sich samt der ersten Struktur 31 in Eingriff mit der zweiten Struktur 15 bewegt. Die Armauflage 12 kann dann wieder in Richtung u1, nicht aber in Richtung u2 bewegt werden.

## Patentansprüche

1. Armlehne mit einem Basisteil (11), an welchem eine Armauflage (12) zwischen einer ersten Position und einer zweiten Position um eine Schwenkachse (a) in entgegengesetzte Schwenkrichtungen (u1, u2) schwenkbar gelagert ist, wobei die Armauflage (12) mit einer Verriegelungsvorrichtung (13) in wenigstens einer Schwenkposition verriegelbar ist und die Verriegelungsvorrichtung (13) eine bewegbare erste Struktur (31) und eine unbewegbare zweite Struktur (15) umfasst, die mit der ersten Struktur (31) lösbar in Eingriff bringbar ist, wobei die erste Struktur (31) zwischen einer Riegelposition und einer Löseposition bewegbar ist und von einer Rückstellkraft in die Riegelposition belastet ist **dadurch gekennzeichnet, dass** das Basisteil (11) zwei Lagerflächen (22, 43) umfasst auf welchen sich Lagerflächen (24, 29) der Armauflage (12) unmittelbar oder mittelbar abstützen, wobei eine erste Lagerfläche (43) an einem ersten Zapfen (14) und eine zweite Lagerfläche (22) an einem koaxial zu dem ersten Zapfen (14) angeordneten zweiten Zapfen (54) ausgebildet ist, wobei eine Lagerfläche (43) bezüglich der Schwenkachse (a) radial innerhalb und eine Lagerfläche (22) radial außerhalb der ersten Struktur (31) und der zweiten Struktur (15) angeordnet ist.

2. Armlehne nach Anspruch 1, **dadurch gekennzeichnet, dass** die zweite Struktur (15) unbewegbar an dem Basisteil (11) oder an der Armauflage angeformt ist.

3. Armlehne nach einem der vorangehenden Ansprüche, **dadurch gekennzeichnet, dass** die erste Struktur (31) und die zweite Struktur (15) koaxial zu der Schwenkachse (a) der Armlehne (10) ausgebildet sind.

4. Armlehne nach einem der vorangehenden Ansprüche, **dadurch gekennzeichnet, dass** die Armauflage (12) an einem Endbereich (25) eine Öffnung (28) bildet, die von dem ersten Zapfen (14) durchgriffen ist.

5. Armlehne nach einem der vorangehenden Ansprüche, **dadurch gekennzeichnet, dass** die erste Struktur (31) und die zweite Struktur (15) zueinander weisende Stirnverzahnungen bilden.

6. 8. Armlehne nach einem der vorangehenden Ansprüche, **dadurch gekennzeichnet, dass** die erste Struktur (31) einem ringförmigen Riegel (32) zugeordnet ist, der in axialer Richtung (y1, y2) bewegbar aber drehfest mit der Armauflage (12) oder mit dem Basisteil (11) verbunden ist.

7. Armlehne nach einem der vorangehenden Ansprüche, **dadurch gekennzeichnet, dass** die erste Struktur (31) durch manuelle Betätigung und / oder in Abhängigkeit der Position der Armauflage (12) zwischen der Riegelposition und der Löseposition verstellbar ist.

## Claims

1. Armrest comprising a base part (11), on which is mounted an arm support (12) pivotable about a pivot axis (a) in opposing pivot directions (u1, u2) between a first position and a second position, wherein the arm support (12) is lockable with a locking device (13) in at least one pivot position and the locking device (13) comprises a movable first structure (31) and an immovable second structure (15), which can be releasably engaged with the first structure (31), wherein the first structure (31) is movable between a locked position and a released position and is loaded by a restoring force into the locked position, **characterised in that** the base part (11) comprises two bearing surfaces (22, 43) on which bearing surfaces (24, 29) of the arm support (12) are directly or indirectly supported, wherein a first bearing surface (43) is formed on a first pin (14) and a second bearing surface (22) on a second pin (54) which is arranged coaxially to the first pin (14), wherein a bearing surface (43), in relation to the pivot axis (a), is arranged radially inside and a bearing surface (22) radially outside of the first structure (31) and of the second structure (15).

2. Armrest according to claim 1, **characterised in that** the second structure (15) is formed immovably on the base part (11) or on the arm support.

3. Armrest according to any one of the preceding claims, **characterised in that** the first structure (31) and the second structure (15) are formed coaxially to the pivot axis (a) of the armrest (10).

4. Armrest according to any one of the preceding claims, **characterised in that** the arm support (12), on an end region (25), forms an opening (28) which is passed through by the first pin (14).

5. Armrest according to any one of the preceding claims, **characterised in that** the first structure (31) and the second structure (15) form front toothings pointing towards one another.

6. Armrest according to any one of the preceding claims, **characterised in that** the first structure (31) is assigned to a ring-shaped lock (32) which is connected so as to be movable in the axial direction (y1, y2), but is connected in a torque-proof manner with the arm support (12) or with the base part (11).

7. Armrest according to any one of the preceding claims, **characterised in that** the first structure (31) is adjustable by manual actuation and/or as a function of the position of the arm support (12) between the locked position and the released position.

## Revendications

1. Accoudoir avec un élément de base (11) sur lequel un repose-bras (12) est monté de façon à pouvoir pivoter entre une première position et une deuxième position autour d'un axe de pivotement (a) dans des directions de pivotement opposées (u1, u2), le repose-bras (12) pouvant être verrouillé avec un dispositif de verrouillage (13) au moins dans une position de pivotement et le dispositif de verrouillage (13) comprenant une première structure (31) mobile et une deuxième structure (15) immobile qui peut entrer en prise de façon amovible avec la première structure (31), la première structure (31) étant mobile entre une position de verrouillage et une position de libération et étant maintenue par une force de rappel dans la position de verrouillage, **caractérisé en ce que** l'élément de base (11) comprend deux surfaces de contact (22, 43) sur lesquelles des surfaces de contact (24, 29) du repose-bras (12) s'appuient directement ou indirectement, une première surface de contact (43) étant formée sur un premier tenon (14) et une deuxième surface de contact (22) sur un deuxième tenon (54) coaxial par rapport au premier tenon (14), une surface de contact (43) étant disposée, par rapport à l'axe de pivotement (a) radialement à l'intérieur et une surface de contact (22) radialement à l'extérieur de la première structure (31) et de la deuxième structure (15).

2. Accoudoir selon la revendication 1, **caractérisé en ce que** la deuxième structure (15) est formée de façon immobile sur l'élément de base (11) ou sur le repose-bras.

3. Accoudoir selon une des revendications précédentes, **caractérisé en ce que** la première structure (31) et la deuxième structure (15) sont configurées de façon coaxiale par rapport à l'axe de pivotement (a) de l'accoudoir (10).

4. Accoudoir selon une des revendications précédentes, **caractérisé en ce que** le repose-bras (12) forme dans une zone d'extrémité (25) une ouverture (28) qui est traversée par le premier tenon (14).

5. Accoudoir selon une des revendications précédentes, **caractérisé en ce que** la première structure (31) et la deuxième structure (15) forment des dentures frontales se faisant face.

6. Accoudoir selon une des revendications précédentes, **caractérisé en ce que** la première structure (31) est associée à un loquet annulaire (32) qui est relié de façon mobile dans une direction axiale (y1, y2) mais fixe en rotation avec le repose-bras (12) ou avec l'élément de base (11).

7. Accoudoir selon une des revendications précédentes, **caractérisé en ce que** la première structure (31) peut être réglée par manuellement et/ou en fonction de la position du repose-bras (12) entre la position de verrouillage et la position de libération.
